# EUROPEAN PATENT SPECIFICATION

(11) **EP 1 232 479 B1**
(45) Date of publication and mention of the grant of the patent: **05.05.2010**
(21) Application number: 00977706.1
(22) Date of filing: 23.11.2000
(51) Int. Cl.: G06T 1/00

(54) **IMAGE PROCESSING APPARATUS**
BILDVERARBEITUNGSGERÄT
APPAREIL DE TRAITEMENT D'IMAGE

(30) Priority: 23.11.1999 GB 9927678; 17.03.2000 GB 0006534
(43) Date of publication of application: 21.08.2002
(73) Proprietor: CANON KABUSHIKI KAISHA, Ohta-ku Tokyo 146-8501 (JP)
(72) Inventor: Dodge, Alexandre P., Canon Res. Centre Europe Ltd., Bracknell, Berkshire RG12 2XH (GB); Davison, Allan J., Canon Res. Centre Europe Ltd., Bracknell, Berkshire RG12 2XH (GB); Baumberg, Adam M., Canon Res. Centre EuropeLtd., Bracknell, Berkshire RG12 2XH (GB); Lyons, Alexander R., Canon Res. Centre Europe Ltd., Bracknell, Berkshire RG12 2XH (GB); Taylor, Richard I., Canon Res. Centre Europe Ltd., Bracknell, Berkshire RG12 2XH (GB)
(74) Representative: Hitching, Peter Matthew
(86) International application number: PCT/GB2000/004464
(87) International publication number: WO 2001/039119

(56) References cited:
- EP-A- 0 790 584
- EP-A- 0 794 516
- EP-A- 0 794 517
- EP-A- 0 930 583
- GB-A- 2 325 996
- US-A- 5 815 683

## Description

The present invention relates to the recording of images of an object and the processing of the image data to determine the orientations at which the images were recorded and, optionally, to generate data defining a three-dimensional (3D) computer model of the object.

3D computer models of objects are useful for many applications. In particular, there is now a growing demand from members of the public to have 3D computer models of objects for uses such as the embellishment of Internet sites, etc.

However, conventional products for generating 3D computer models of an object are both expensive and require considerable processing resources (that is, processing power and/or time). Consequently, this restricts the availability of 3D computer modelling packages to users.

The present invention has been made with this in mind.

US 5,815,683 discloses an access facilitator programmed to provide access service for facilitating remote client access to computer-aided design (CAD) tools. The access service includes services for accepting an access connection from a client, obtaining an internetworking address of the client, receiving an access request from the client, and routing the access request including the internetworking address to a CAD tool, resulting in the CAD tool directly responding to the client.

EP-A-0,930,583 discloses a method and apparatus for tracking image recording device motion using a light field. The method locates the image recording device's position and orientation in each frame very precisely by checking the radiance seen along lines captured in previous frames. The method provides an interactive system that provides the operator with feedback, to capture a sequence of frames that sufficiently cover the light field, to provide sufficient data for reconstruction of three-dimensional structures.

GB-A-2,325,996 discloses a distributed computer aided design (CAD) system including a CAD server station and one or more CAD client stations remote from the server station but connectable thereto via a communications medium such as an intranet or the internet. The server station includes a tool for performing CAD tasks and a communications interface. The client stations include facilities for displaying a design parameter entry document to a user and for accepting design parameters entered by the user, as well as a communications interface for transmitting entered design parameters to the server station. The CAD tool is configured to receive the design parameters to perform CAD tasks based on them, and to return processed design data to the client station.

EP-A-0,790,584 discloses a person design system for designing the appearance of an equipment suiting the sensibility and the physical features of a user by establishing data communication between a user terminal comprising a user information inputting section and a server on the side of a producer. The user inputs user information such as the sensibility and the physical features of the user corresponding to the designed appearance of the equipment using the user information inputting section. The equipment having the designed appearance intended by the user is produced on the basis of the inputted user information and a database provided in the server by designing means provided in the user terminal.

EP-A-0,794,517 discloses that three-dimensional geometric data of an architecture is generated, and image mapping data is generated by mapping a texture representing a pattern on the surface of the generated three-dimensional geometric data. A reflection of a virtual space is generated on the basis of the generated three-dimensional geometric data and image mapping data, and is changed in correspondence with movement of the viewpoint and/or the line of sight of the operator, so that the operator can interactively experience the virtual space of the architecture.

EP-A-0,794,516 discloses that a three-dimensional space is generated using shape model data and its surface characteristic and pattern, a space is rebuilt from the three-dimensional space as an image in accordance with a drawing specification determined by the viewpoint position, direction, angle of view, and the like, an image is generated from light space data using the drawing specification, and the images generated based on the shape model data and the light space data are fused, thereby easily generating and fusing shape model data and an actually taken image, and displaying an image with high reality.

According to the present invention, there is provided a method of processing image data as set out in claim 1.

The present invention also provides a method of processing image data as set out in claim 17.

The present invention also provides a processing method as set out in claim 33.

The present invention also provides a system for processing image data as set out in claim 45.

The present invention also provides apparatus for processing image data as set out in claim 54.

The present invention also provides a storage medium storing computer program instructions as set out in claim 62.

The present invention further provides a signal conveying computer program instructions as set out in claim 63.

In an embodiment, a three-dimensional computer model of an object is generated using a technique in which an object is imaged at the same time as a calibration pattern, the images are processed to determine the positions and orientations at which they were recorded, and the images and positions and orientations are processed to generate a 3D computer model of the object. Data defining the calibration pattern is stored in a first computer processing apparatus, and data is sent to a customer computer processing apparatus to enable the customer apparatus to print or display the calibration pattern. Images of a subject object together with the calibration pattern are then recorded and returned to the first apparatus, which performs processing using the stored data defining the calibration pattern to determine the positions and orientations at which the images were recorded. Subsequently, a three-dimensional computer model of the subject object is generated using the calculated positions and orientations.

By storing data defining the calibration pattern in a first apparatus, transmitting calibration pattern data to the customer apparatus, and performing the imaging position and orientation calculations in the first apparatus, the user is not required to purchase expensive processing products, or to run a resource-intensive product on his apparatus. Instead, computationally expensive processing can be performed in a supplier's apparatus, and the user can pay a small fee each time the processing services offered by the supplier are used, this being enabled by the transmission of calibration pattern data to the user and the storage of data defining the calibration pattern which will appear in the return images.

Embodiments of the invention will now be described, by way of example only, with reference to the accompanying drawings, in which:
Figure 1 schematically shows the components of a first embodiment of the invention, together with the notional functional processing units into which the computer components may be thought of as being configured when programmed by programming instructions;
Figure 2 shows the processing operations performed by the apparatus in the system of Figure 1 to generate data defining a 3D computer model of an object;
Figure 3 shows the components of a second embodiment of the invention, together with the notional functional processing units into which the computer components may be thought of as being configured when programmed by programming instructions; and
Figure 4 shows the processing operations performed by the apparatus in the system of Figure 3 to generate data defining a 3D computer model of an object.

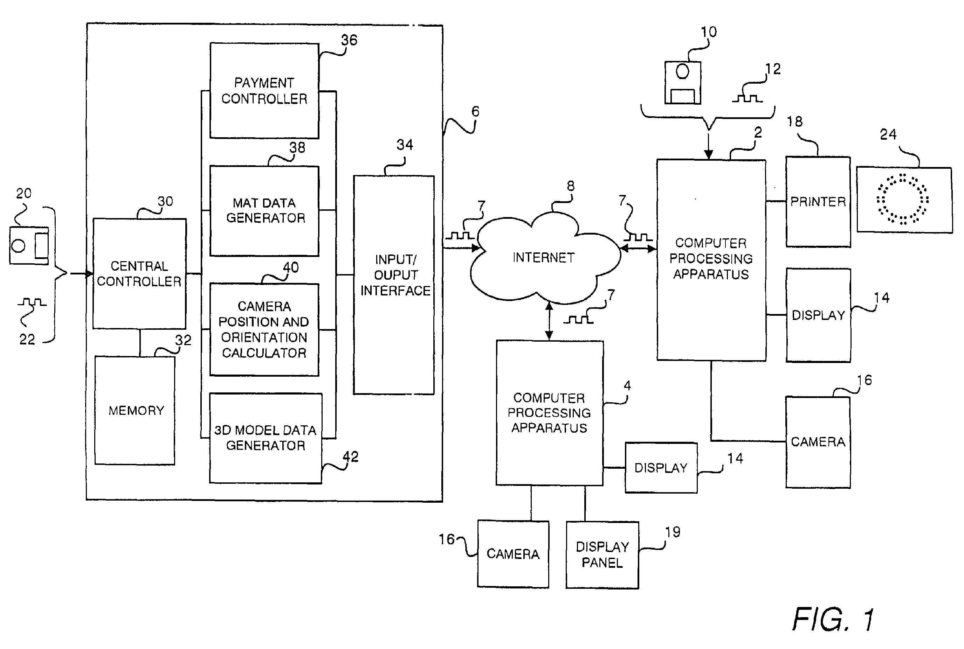

Referring to Figure 1, a first embodiment of the invention comprises a plurality of computer processing apparatus 2, 4, 6 connected to exchange data by transmitting signals 7 via a communications network 8, such as the Internet.

In this embodiment each processing apparatus 2, 4 is used by a customer, and has connected thereto a display device 14, such as a conventional personal computer monitor and a digital camera 16. In addition, the processing apparatus 2 has connected thereto a printer 18, and processing apparatus 4 has connected thereto a flat display panel 19 having controllable pixels, such as the PL400 manufactured by WACOM.

Each of the processing apparatus 2, 4 is a conventional personal computer programmed to operate in accordance with programming instructions input, for example, as data stored on a data storage medium, such as disk 10, and/or as a signal 12 input to the processing apparatus 2, 4, for example from a remote database, by transmission over a communication network such as the Internet 8 or by transmission through the atmosphere and/or entered by a user via a user input device such as keyboard (not shown). The programming instructions for each processing apparatus 2, 4 may be supplied either in compiled, computer executable format or in a format (such as source code) for conversion to a compiled format.

Processing apparatus 6 is provided by a 3D modelling service provider. In this embodiment, processing apparatus 6 comprises a conventional programmable computer, containing in a conventional manner, one or more processors, memories, graphics cards, etc.

The processing apparatus 6 is programmed to operate in accordance with programming instructions input, for example, as data stored on a data storage medium, such as disk 20 and/or as a signal 22 input to the processing apparatus 6, for example from a remote database, by transmission over a communication network such as the Internet 8 or by transmission through the atmosphere and/or entered by a user via a user input device such as a keyboard (not shown). The programming instructions for processing apparatus 6 may be supplied either in compiled, computer executable format or in a format (such as source code) for conversion to a compiled format.

As will be described in more detail below, the programming instructions comprise instructions to cause the processing apparatus 6 to become configured to process payments from a user, and in response to a valid payment, to transmit instructions to a connected customer computer processing apparatus 4, 6 to enable the customer apparatus to control printer 18 to print a calibration pattern thereby to form a calibration object which, in this embodiment, comprises a photographic mat 24 having a special pattern of features thereon, or to control a display panel 19 to display the calibration pattern so that the display displaying the features of the calibration pattern acts as a photographic mat. The programming instructions further cause the processing apparatus 6 to become configured to process data received from a customer computer processing apparatus 2, 4 defining images of a subject object and the photographic mat so as to calculate the positions and orientations at which the images were recorded by detecting the positions of the features of the photographic mat pattern (calibration pattern) in the images, and to use the calculated positions and orientations to generate data defining a three-dimensional computer model of the subject object which is transmitted to the paying user. When programmed by the programming instructions, processing apparatus 6 can be thought of as being configured as a number of functional units for performing processing operations. Examples of such functional units and their interconnections are shown in Figure 1. The units and interconnections illustrated in Figure 1 are, however, notional and are shown for illustration purposes only to assist understanding; they do not necessarily represent units and connections into which the processor, memory etc of the processing apparatus 6 become configured.

Referring to the functional units shown in Figure 1 a central controller 30 provides control and processing for the other functional units, and a memory 32 is provided for use by central controller 30 and the other functional units.

An input/output interface 34 is arranged for the output of signals 7 to, and receipt of signals 7 from, the connected customer computer processing apparatus 2, 4.

A payment controller 36 is arranged to perform processing operations to obtain and check payments from a customer computer processing apparatus 2, 4.

A mat data generator 38 generates control signals which are sent as signals 7 to customer processing apparatus 2 to enable customer apparatus 2 to control printer 18 to print a calibration pattern on a recording medium such as a piece of paper to form a photographic mat 24, or to customer processing apparatus 4 to enable customer apparatus 4 to control display panel 19 to display the calibration pattern to form the photographic mat. As will be described in more detail below, the photographic mat comprises a pattern of features (calibration pattern), and the subject object(s) for which a three-dimensional computer model is to be generated is placed on the printed photographic mat 34 or on the display panel 19 on which the photographic mat is displayed. Images of the subject object on the photographic mat are then recorded by a camera 16 and returned to the processing apparatus 6 as signals 7 for processing. Mat data generator 38 stores in memory 32 data defining the calibration pattern printed or displayed to form the photographic mat for use by the processing apparatus 6 in calculating the positions and orientations at which the received images were recorded.

Camera position and orientation calculator 40 processes the received data defining a plurality of images of the subject object(s) and the printed or displayed photographic mat to calculate the position and orientation of the camera 16 when each image was recorded.

3D model data generator 42 processes the received data defining the images and the data defining the positions and orientations at which the images were recorded to generate data defining a 3D computer model of the object(s) in the images.

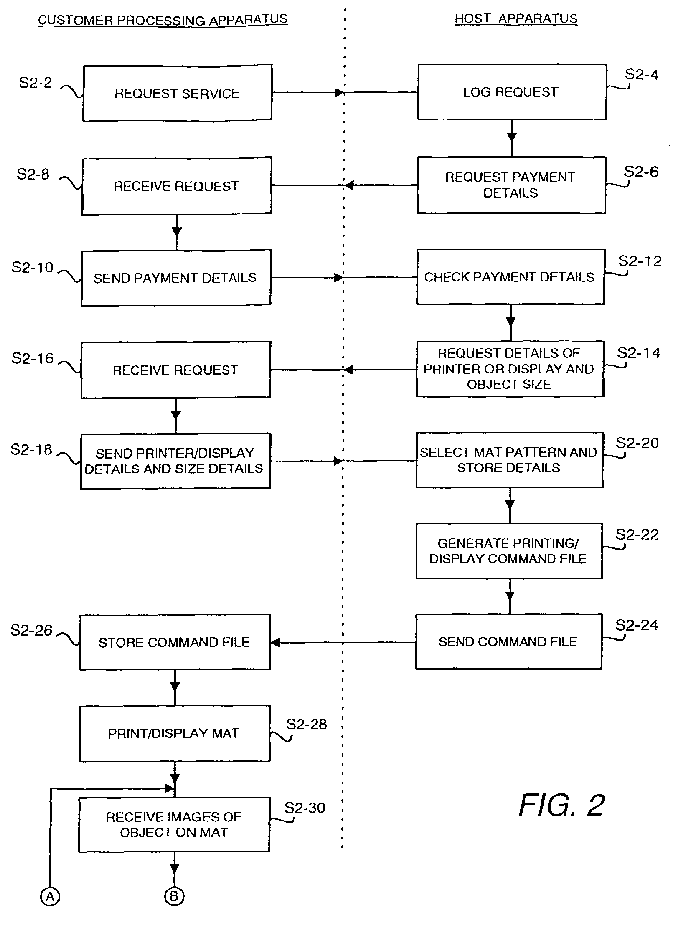

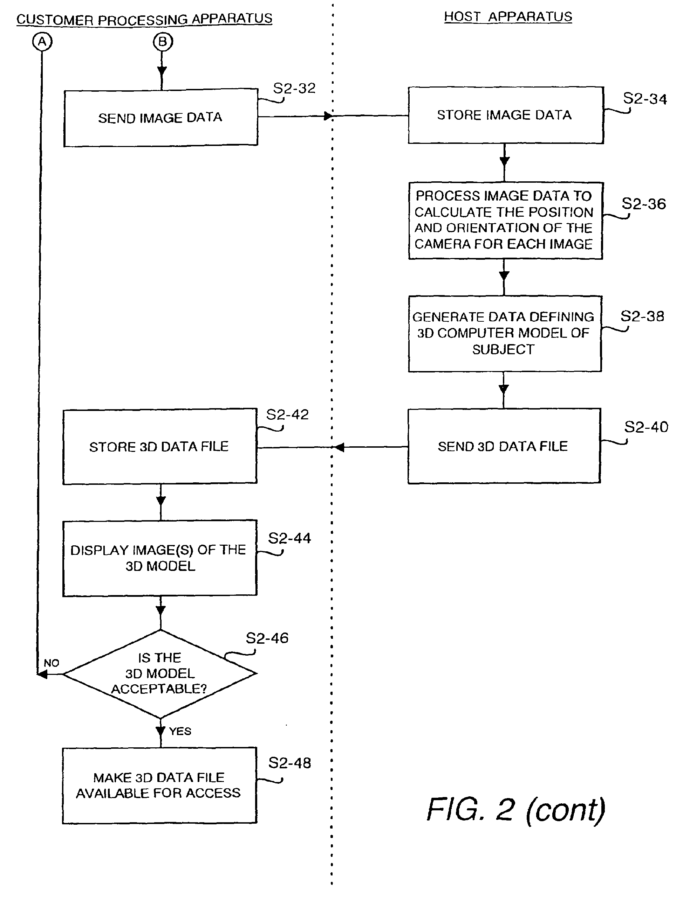

Figure 2 shows the processing operations performed by processing apparatus 6 and one of the customer computer processing apparatus 2, 4 in the first embodiment. Communication between the processing apparatus 6 and the customer computer processing apparatus is by the transmission of signals 7 over the communication network 8.

Referring to Figure 2, at step S2-2, a customer processing apparatus 2, 4 transmits a request to processing apparatus 6 for a 3D modelling service.

At step S2-4, payment controller 36 of processing apparatus 6 logs the request, and at step S2-6 transmits a signal to the customer processing apparatus requesting payment details, for example a credit card number or identification of an account which the customer holds with the operator of processing apparatus 6.

At step S2-8, the customer processing apparatus receives the payment request, and at step S2-10 sends the requested payment details.

At step S2-12, payment controller 36 in processing apparatus 6 receives the payment details sent by the customer processing apparatus and checks the details, for example to confirm the credit card payment with an authorisation agency or to check whether the customer's account is in credit.

It is determined at S2-12 that a satisfactory payment has been made, then, at step S2-14, mat data generator 38 requests data from the customer processing apparatus defining the type of printer 18 or display panel 19 which is to print or display the photographic mat, and also data defining the maximum width in any direction of the object to be placed on the photographic mat.

At step S2-16, the customer processing apparatus receives the request for printer/display details and object size, and at step S2-18, sends the requested details to the processing apparatus 6.

At step S2-20, mat data generator 38 selects at random a calibration pattern for the photographic mat from patterns prestored in memory 32, and stores data in memory 32 defining which pattern has been selected.

More particularly, in this embodiment, calibration patterns comprising concentric circles connected by radial line segments with known dimensions and position markers in each quadrant, for example as described in "Automatic Reconstruction of 3D Objects Using a Mobile Camera" by Niem in Image and Vision Computing 17 (1999) pages 125-134, patterns comprising concentric rings with different diameters, for example as described "The Lumigraph" by Gortler et al in Computer Graphics Proceedings, Annual Conference Series, 1996 ACM-0-89791-764-4/96/008, patterns comprising coloured dots with each dot having a different hue/brightness combination so that each respective dot is unique, for example as described in JP-A-9-170914, and patterns comprising spatial clusters of features for example as described in WO 01/39124 (the full contents of which are incorporated herein by cross-reference) are stored in memory 32.

In this embodiment, the features on the photographic mat are arranged around a blank central area on which the subject object is to be placed. Mat data generator 38 selects the diameter of the central blank area to be larger than the maximum width of the object defined in the data received from the customer processing apparatus. In this way, the features in the calibration pattern on the photographic mat are positioned so that they will be visible when the object is placed on the mat.

At step S2-22, mat data generator 38 generates a command file for use by the customer processing apparatus to cause printer 18 to print a photographic mat having the calibration pattern selected at Step S2-20, or for use by processing apparatus 4 to cause display panel 19 to display a photographic mat with the calibration pattern selected at step S2-20. More particularly, in this embodiment, mat data generator 38 generates the command file in dependence upon the type of printer or display defined in the details received from the customer apparatus, so that the instructions in the command file are suitable for enabling the customer apparatus to control the printer or display panel connected to the customer processing apparatus.

At step S2-24, the command file generated at step S2-22 is sent from processing apparatus 6 to the customer processing apparatus.

At step 2-26, the customer processing apparatus stores the received command file sent from the processing apparatus 6, and at step S2-28, the customer processing apparatus uses the command file to print the calibration pattern using printer 18 to form a photographic mat 24 or to display the calibration pattern to form a photographic mat on display panel 19.

Having printed or displayed the photographic mat, the subject object (or objects) for which a 3D computer model is to be generated, is placed in the blank centre portion of the photographic mat, so that the object is surrounded by the calibration pattern features on the mat.

Images of the object and the photographic mat are then recorded at different positions and orientations using a camera 16 to show different parts of the subject object. More particularly, in this embodiment, camera 16 remains in a fixed position (for example a tripod) and the photographic mat with a subject object thereon is moved (translated) and rotated, and photographs of the subject object at different positions and orientations relative to the camera 16 are recorded. During the rotation and translation of the photographic mat, the subject object does not move relative to the mat.

At step S2-30, the customer processing apparatus receives data defining the recorded images showing the subject object(s) on the photographic mat, and at step S2-32, sends the image data to the processing apparatus 6.

In Figure 2, steps S2-26 to S2-32 described above are shown as occurring without interruption. However, after receiving and storing the command file step at S2-26, connection between the customer processing apparatus and the processing apparatus 6 may be broken while the user of the customer processing apparatus performs step S2-28, records images of the subject object and calibration pattern, and inputs the image data to the customer processing apparatus. The steps of printing or displaying the calibration pattern, recording the images of the subject object and calibration pattern, and inputting the image data to the customer processing apparatus need not occur immediately after receiving and storing the command file at step S2-26. For example, these steps may be performed one or more days later. Similarly, images of the subject objection and calibration pattern may be taken one or more days after printing or displaying the calibration patten in step S2-28. Consequently, when step S2-32 is performed to send image data from the customer processing apparatus to the processing apparatus 6, it may be necessary to reestablish a connection from the customer processing apparatus to the processing apparatus 6 via the network 8.

At step S2-34, processing apparatus 6 stores the image data received from the customer processing apparatus in memory 32, and at step S2-36, processes the image data to calculate the position and orientation of the camera 16 for each image.

More particularly, at step S2-36, camera position and orientation calculation 40 performs processing first to calculate the values of the intrinsic parameters of the camera 16 which recorded the images (that is, the aspect ratio, focal length, principal point, first order radial distortion coefficient and skew angle) in a conventional manner, for example as described in "Euclidean Reconstruction from Uncalibrated Views" by Hartley in Applications of Invariance in Computer Vision, Mundy Zisserman and Forsyth Eds at pages 237-256, Azores, 1993. Camera position and orientation calculator 40 then performs processing for each respective image to detect the features of the calibration pattern on the photographic mat in the image, to label the features (that is, to identify a one-to-one correspondence between each feature detected in the image and a feature of the calibration pattern defined in the data previously stored in memory 32 at step S2-20), and to use the one-to-one correspondences to calculate the position and orientation at which the image was recorded. More particularly, in this embodiment, the processing to detect and label the features and to calculate the camera position and orientation is performed as described in "Automatic Reconstruction of 3D Objects Using a Mobile Camera" by Niem in Image and Vision Computing 17 (1999) pages 125-134, "The Lumigraph" by Gortler et al in Computer Graphics Proceedings, Annual Conference Series, 1996 ACM-0-89791-764-4/96/008, JP-A-9-170914 or WO 01/39124, depending upon the mat pattern selected at step S2-20.

At step S2-38, 3D model data generator 42 in processing apparatus 6 performs processing using the image data previously stored at step 2-34 and the position and orientation of each image calculated at step S2-36 to generate data defining a computer model of the 3D surface of the subject object and to generate texture data for the surface model. This processing is performed using one of the techniques described in "Automatic Reconstruction of 3D Objects Using a Mobile Camera" by Niem in Image and Vision Computing 17 (1999) pages 125-134, "The Lumigraph" by Gortler et al in Computer Graphics Proceedings, Annual Conference Series, 1996 ACM-0-89791-764-4/96/008, JP-A-9-170914 or WO 01/39124.

At step S2-40, 3D model data generator 42 transmits a signal 7 to the customer processing apparatus containing data defining the 3D computer model generated at step S2-38.

At step S2-42, the 3D data file sent by processing apparatus 6 is stored in the customer processing apparatus, and at step S2-44, one or more images of the 3D computer model are rendered from user-selected viewing directions and are displayed to the user on display device 14.

At step S2-46, the customer processing apparatus reads input signals from a user defining whether the 3D computer model is of an acceptable standard.

If it is determined at step S2-46 that the 3D computer model is acceptable, then, at step S2-48, the 3D data file previously stored at S2-42 is made available for access via other apparatus by the Internet 8, in a conventional manner.

On the other hand, if it is determined at step S2-46 that the 3D computer model is not acceptable, then steps S2-30 to S2-46 are repeated. That is, further images of the subject object on the photographic mat are recorded and sent to processing apparatus 6, processing apparatus 6 performs processing using the further images to amend and improve the 3D computer model, and the improved model is transmitted to the customer processing apparatus. Steps S2-30 to S2-46 are repeated until a satisfactory 3D computer model has been generated.

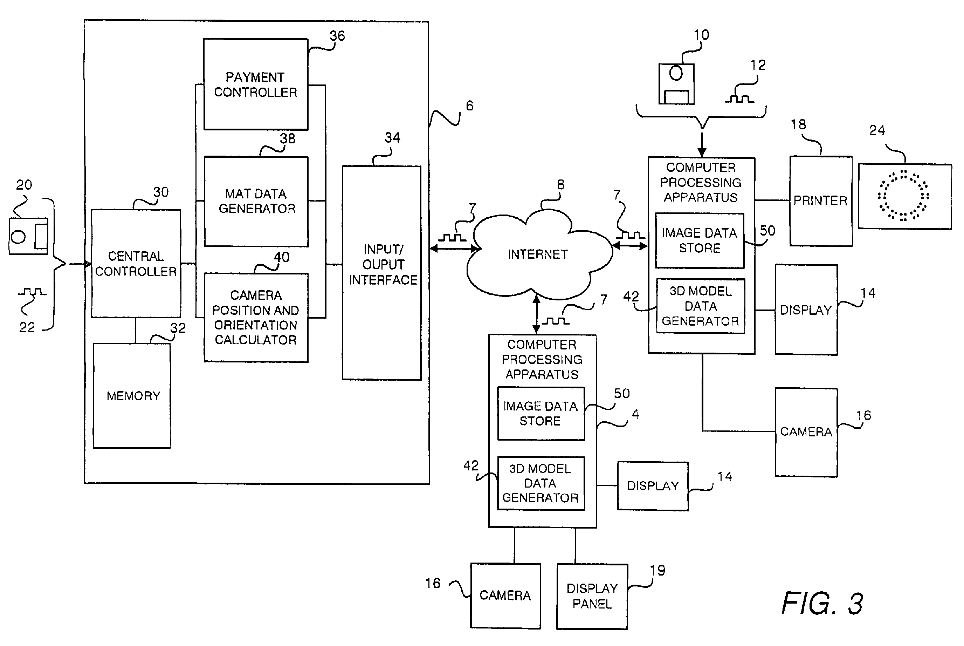

Figure 3 shows the components of a second embodiment.

In the second embodiment, components which are the same as the first embodiment are labelled with the same reference number, and will not be described again here as they have already been described above.

The differences between the components in the second embodiment compared to the components in the first embodiment are, firstly, an image data store 50 is provided in each customer computer processing apparatus 2, 4, and, secondly, the 3D model data generator 42 which was provided in processing apparatus 6 in the first embodiment is now provided in each customer computer processing apparatus 2, 4. All of the other components are the same.

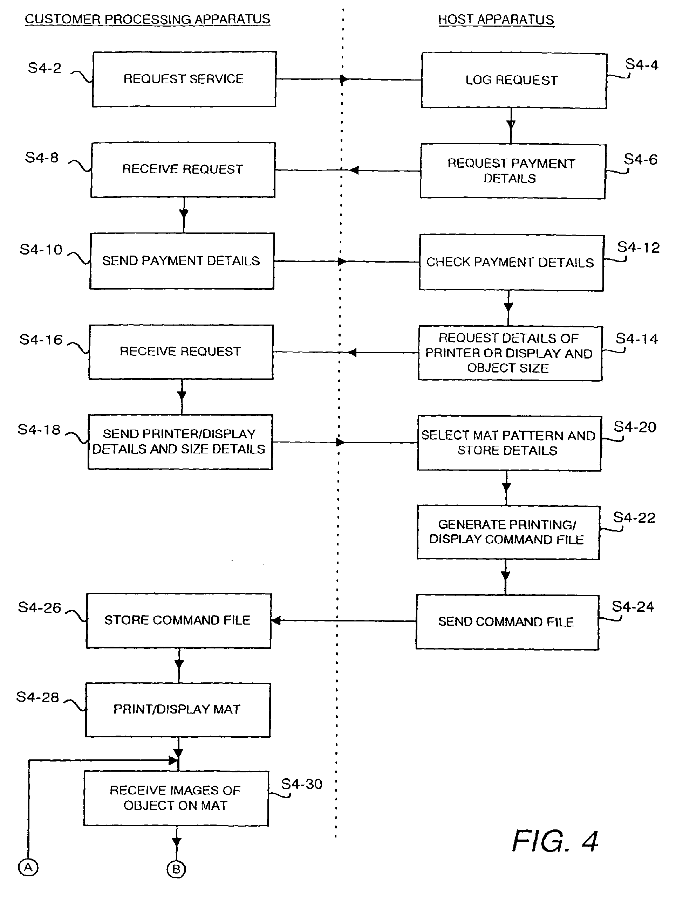

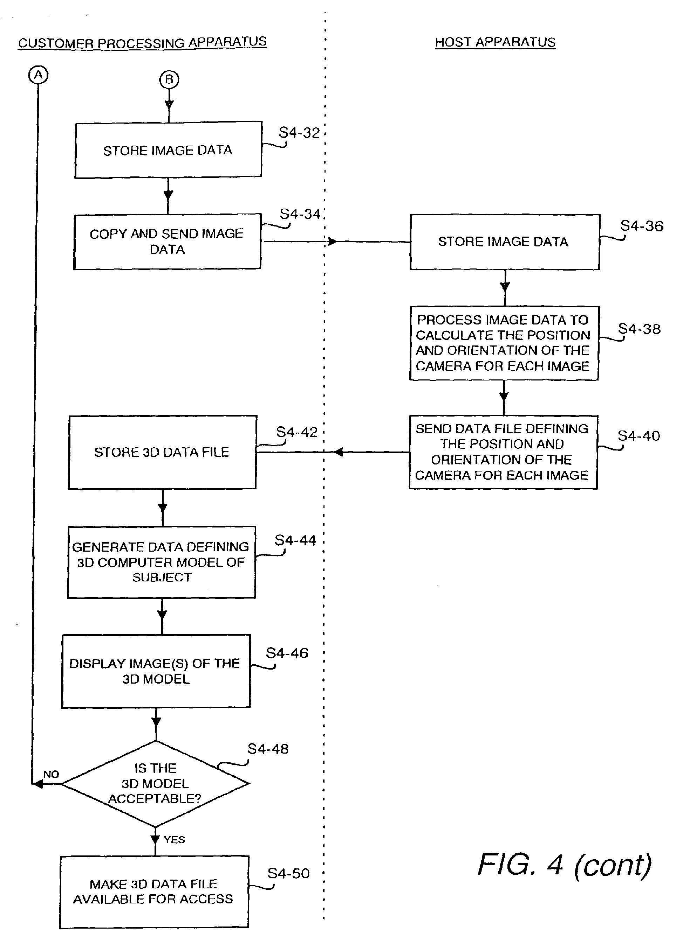

Figure 4 shows the processing operations in the second embodiment.

Referring to Figure 4, steps S4-2 to S4-30 are the same as steps S2-2 to S2-30 in the first embodiment, and accordingly will not be described again here.

In the first embodiment, data defining images of the subject object and photographic mat is transmitted from a customer processing apparatus 2, 4 to processing apparatus 6, where it is processed to calculated the position and orientation of each image and to generate data defining a 3D computer model of the subject object. A 3D data file defining the 3D computer model is then returned from processing apparatus 6 to the customer processing apparatus.

In the second embodiment, however, processing to calculate the position and orientation at which each image is recorded is still carried out in processing apparatus 6, but processing to generate data defining a 3D computer model of the subject object is performed in a customer processing apparatus 2, 4.

More particularly, referring to Figure 4, at step S4-32, images of the subject object and the photographic mat are stored in the customer computer processing apparatus in image data store 50.

At step S4-34, the image data stored at step S4-32 is copied and sent from the customer computer processing apparatus to the processing apparatus 6.

At step S4-36, processing apparatus 6 stores the received image data in memory 32, and at step S4-38, camera position and orientation calculator 40 performs processing to calculate the positions and orientation of the camera 16 for each image. Step S4-38 is the same as step S2-36 in the first embodiment, and accordingly will not be described again here.

At step S4-40, processing apparatus 6 transmits a data file defining the positions and orientations of the images calculated at step S4-38 to the customer processing apparatus.

At step S4-42, the customer computer processing apparatus stores the data file defining the positions and orientations, and at step S4-44, performs processing using the image data previously stored at step S4-32 and the positions and orientations stored at S4-42 to generate data defining a 3D computer model of the subject object. Step S4-44 is performed in the same way as step S2-38, and accordingly will not be described again here.

Steps S4-46 to S4-50 are the same as steps S2-44 to S2-48 in the first embodiment, and accordingly will not be described again here.

Many modifications can be made to the embodiments above within the scope of the present invention.

For example, the subject object does not need to be placed on the photographic mat. More particularly, the subject object may be placed alongside the mat and images recorded so that at least part of the object and calibration pattern are visible in each image.

Accordingly, the photographic mat does not need to be in a horizontal plane. It could, for example, be hung in a vertical plane behind the subject object.

In the embodiments described above, the printer instructions sent from processing apparatus 6 to a customer computer processing apparatus instruct printer 18 to print photographic mat 24 in accordance with the object size. If the size is so large that a photographic mat 24 cannot be printed on a single sheet of paper, then mat data generator 38 may generate data to control printer 18 to print different parts of the calibration pattern of the photographic mat 24 on separate sheets of paper, which can then be placed together to form the photographic mat 34.

Alternatively, mat data generator 38 may generate data to control printer 18 to print different parts of the calibration pattern on separate sheets and, instead of assembling the separate sheets to form a photographic mat 24 so that the features in the calibration pattern are at known predetermined positions stored in processing apparatus 6, the separate sheets with the different parts of the calibration pattern thereon may be placed around the subject object at positions and orientations chosen by the user, so that the positions of the calibration pattern parts relative to each other are not known.

Images of the subject object and the different parts of the calibration pattern on the separate sheets would then be recorded at different positions and/or orientations by moving the imaging camera 16 relative to the subject object and the sheets.

In each input image, the features in each part of the calibration pattern are known (because mat data generator 38 sent data defining the features to be printed) but the relative positions of the different parts of the calibration pattern around the subject object are not known. Accordingly, camera position and orientation calculator 40 performs processing to detect the features of the calibration pattern in each image by searching each image to detect the predetermined features of the calibration pattern which are stored in memory 32, and then uses the detected features to calculate the positions and orientations of the images relative to each other.

More particularly, because camera position and orientation calculator 40 detects predetermined calibration pattern features in the input image, as described in the embodiments above, camera position and orientation calculator 40 establishes a one-to-one-correspondence between features in each input image and stored calibration pattern features. These one-to-one correspondences therefore define features in different input images which correspond to each other, that is, features which match between the different input image. This is because, features in different input images which correspond to the same stored calibration pattern therefore correspond to (match) each other.

Camera position and orientation calculator 40 therefore performs processing to calculate the relative positions and orientations of the camera 16 for each input image using the matching features in the input images.

Many techniques are known for calculating relative imaging positions and orientations once matching features in input images have been detected. For example, suitable processing is described in EP-A-0898245 and EP-A-0901105.

In summary, therefore, in this modification, the photographic mat comprises a plurality of pieces, each piece having part of the calibration pattern thereon. When images of the subject object and the photographic mat are processed, the features of the calibration pattern are known and prestored in processing apparatus 6 and can therefore be reliably detected by camera position and orientation calculator 40 in each input image. The input images are then processed by camera position and orientation calculator 40 to calculate the imaging positions and orientations relative to each other using the detected features to define matching features in the input images, and using the matching features to calculate the relative positions and orientations in a conventional manner.

Further, in the embodiments above, the calibration pattern may be attached to the subject object, and the camera moved relative to the subject object with the calibration pattern thereon to record the images at different positions and/or orientations. For example, one or more calibration patterns may be attached to different surfaces of the subject object.

In the embodiments above, processing apparatus 6 may generate the instructions for enabling the customer processing apparatus to print or display a calibration pattern to form a photographic mat in dependence upon data received from the customer processing apparatus defining characteristics other than the size of the subject object. For example, processing apparatus 6 may generate the instructions in dependence upon the colour of the subject object so that the features in the calibration pattern on the photographic mat do not have the same colour as the subject object and can therefore easily be distinguished from features on the subject object.

The display panel 19 could comprise any form of display apparatus for displaying the calibration pattern of the photographic mat. For example, the display panel 19 could comprise the display of display device 14 which could be turned so that the display is horizontal if the object is to be placed on the photographic mat, or could be placed behind the object so that the display is in a substantially vertical plane.

In the embodiments described above, the calibration object which is imaged with the subject object has the form of a two-dimensional photographic mat. However, instead of a photographic mat, a three-dimensional calibration object may be used. For example, mat data generator 38 may generate instructions to control printer 18 to print calibration patterns of features on separate sheets, and the sheets may then be folded into or attached to a three-dimensional object, such as a cube. The cube with the calibration pattern on it can then be used as a three-dimensional calibration object.

In the embodiments above, at step S2-20 and step S4-20, mat data generator 38 selects a calibration pattern from the patterns stored in memory 32 at random. However, calibration patterns may be selected in other ways. For example, the identity of the customer may be determined and a calibration pattern previously allocated to the customer selected. Further, mat data generator 38 may select a calibration pattern in dependence upon characteristics of the printer/display defined in the details received from the customer processing apparatus. For example, mat data generator 38 may select a calibration pattern in dependence upon whether the printer is a colour printer and the resolution of the printer. In this way, a calibration pattern with appropriate features for the printer can be selected.

In addition, processing apparatus 6 may store details of each customer's printer/display so that, when a customer requests a service, the identity of the customer may be determined and the printer/display details read, so that it is not necessary for the customer to send the printer/display details.

In the embodiments described above, at steps S2-22 and S4-22, mat data generator 38 generates a command file to be used by the customer processing apparatus to control printer 18 or display panel 19. However, instead of generating and sending a printer or display command file, mat data generator may send data defining the calibration pattern selected at step S2-20 and S4-20. The customer processing apparatus would then generate its own instructions to control printer 18 or display 19 to print or display the calibration pattern.

In the embodiments above, processing is performed by camera position and orientation calculator 40 to calculate the intrinsic parameters of the camera 16 which was used to record images of the photographic matter and subject object. However, instead, the intrinsic parameters may be transmitted from the customer computer processing apparatus to processing apparatus 6 or, default values may be assumed for some, or all, of the intrinsic camera parameters.

In the embodiment above, each camera 16 is a digital camera connected to a customer processing apparatus. However, each camera 16 may be separate from a customer processing apparatus and may transfer data thereto via a memory device or a temporary connection etc. Further, images of the photographic mat and subject object may be recorded using a conventional film camera and a scanner connected to the customer computer processing apparatus may be used to scan photographs to generate digital image data for transmission to processing apparatus 6.

In the embodiments above, the 3D computer model generated by 3D model data generator 42 may be made available for access on the Internet 8 by processing apparatus 6 rather than a customer computer processing apparatus 2, 4.

In the embodiments above, if it is determined at step S2-46 (Figure 2) or step S4-48 (Figure 4) that a 3D model is not of an acceptable standard, then the model is improved by recording and processing further images. However, in addition, or instead, the model may be amended interactively by a user by displaying the model and moving, adding or deleting points or surfaces making up the model.

In the embodiments above, the customer computer processing apparatus 2, 4 to which photographic mat print or display instructions are sent by processing apparatus 6 is also the customer processing apparatus to which image data is input (step S2-30 or step S4-30) and which sends the image data to the processing apparatus 6 (step S2-32 or step S4-34). However, different customer computer processing apparatus may be used to print or display the photographic mat and to receive input image data and send the image data to the processing apparatus 6. For example, processing apparatus 6 may send print instructions to processing apparatus 2, which uses the instructions to control printer 18 to print a photographic mat 24. Photographic mat 24 and a subject object may then be imaged using a camera 16 and the image data input to a different customer processing apparatus 4, which transmits the image data to processing apparatus 6.

In the first embodiment above, the processing apparatus 6 sends the data file defining the 3D computer model generated by the 3D model data generator 42 back to the customer computer processing apparatus which sent the image data to the computer processing apparatus 6 for processing. However, instead, data defining the 3D computer model may be sent to a different customer computer processing apparatus. For example, processing apparatus 6 may send print instructions to customer processing apparatus 2 which uses the instructions to control printer 18 to print a photographic mat 24. Customer computer processing apparatus 2 may also then return image data to the processing apparatus 6 for processing. However, instead of returning data defining the resulting 3D computer model to processing apparatus 2, processing apparatus 6 may send the data defining the 3D computer model to a different processing apparatus 4.

In the second embodiment described above, at step S4-32, the customer computer processing apparatus stores image data for subsequent use when data has been received from processing apparatus 6 defining the positions and orientations of the images to generate the 3D computer model data. Instead, however, to remove the need for the customer processing apparatus to store the image data, processing apparatus 6 may return the image data together with the data defining the position and orientation of each image to the customer processing apparatus.

In the second embodiment described above, the data defining the position and orientation of each image is returned to the customer computer processing apparatus which sent the image data to the processing apparatus 6 for processing. However, the data defining the position and orientation results may be sent to a different customer computer processing apparatus together with the image data. For example, processing apparatus 6 may send print instructions to processing apparatus 2, which uses the instructions to control printer 18 to print a photographic mat 24 and processing apparatus 2 may return image data to processing apparatus 6. Processing apparatus 6 may then calculate the position and orientation of each image, and send the calculated positions and orientations together with the received image data to customer computer processing apparatus 4. Customer computer processing apparatus 4 may then process the received data to generate a 3D computer model of the subject object.

In the embodiments described above, two customer processing apparatus 2, 4 are described as connected to processing apparatus 6. However, more, or less, customer processing apparatus may of course be connected to processing apparatus 6.

In the embodiments described above, the functional processing units of processing apparatus 6 are described as part of a single apparatus. However, the functional components may be provided in a number of separate apparatus which act together to constitute processing apparatus 6.

In the embodiments above, the communications network 8 connecting the computer processing apparatus 2, 4, 6 comprises a single network. However, the network may comprise a plurality of connected networks. One or more of the computer processing apparatus 2, 4, 6 may be connected to the network(s) via a wireless connection (for example radio signals). Of course, one or more connections between the computer processing apparatus 2,4, 6 may be a telephone connection.

In the embodiments described above, at steps S2-38 and S4-44 processing is performed to generate data defining a 3D computer model of the subject object, at steps S2-44 and S4-46, images of the 3D computer model are displayed, and at steps S2-48 and S4-50, the data defining the 3D computer model is made available for access. However, in addition, or instead, the imaging positions and orientations calculated at steps S2-36 and S4-38 may be used to control manufacturing equipment to manufacture a physical model of the subject object. For example, data may be generated to control a cutting apparatus to cut material to the appropriate dimensions to model the subject object.

In the embodiments described above, processing is performed by computers using processing routines defined by programming instructions. However, some, or all, of the processing could be performed using hardware.

## Claims

1. A method of processing image data, **characterised by**:
sending (S2-24; S4-24) from a first apparatus (6) to a second apparatus (2, 4) calibration pattern data to allow the generation of a calibration pattern of distinguishable features by the second apparatus using an image output apparatus (18, 19), and storing data in the first apparatus defining the calibration pattern for subsequent use (S2-20; S4-20);
generating the calibration pattern using the image output apparatus and the data from the first apparatus (S2-28; S4-28);
recording a plurality of images of the subject object and calibration pattern with imaging means at different relative orientations, and sending data defining the images to the first apparatus (S2-32; S4-34); and
performing processing in the first apparatus on the basis of the stored data defining the calibration pattern to calculate the orientations at which at least some of the images were recorded (S2-36; S4-38).

2. A method according to claim 1, further comprising:
performing processing in the first apparatus using the calculated orientations to generate data defining a three-dimensional computer model of the subject object (S2-38).

3. A method according to claim 1, further comprising:
sending data defining the calculated orientations from the first apparatus to a 3D modelling apparatus (S4-40); and
performing processing in the 3D modelling apparatus using the calculated orientations to generate data defining a three-dimensional computer model of the subject object (S4-44).

4. A method according to claim 1, further comprising:
performing processing using the calculated orientations to generate data for controlling an apparatus to create a physical model of the subject object.

5. A method according to any preceding claim, wherein the data defining the images is sent from the second apparatus to the first apparatus.

6. A method according to any of claims 1 to 4, wherein the data defining the images is sent from a third apparatus to the first apparatus.

7. A method according to claim 3, wherein the 3D modelling apparatus is the second apparatus to which the calibration pattern data is sent by the first apparatus.

8. A method according to claim 3 or claim 7, wherein image data for each image for which the orientation of the imaging means has been calculated is sent from the first processing apparatus to the 3D modelling apparatus together with the data defining the calculated orientations.

9. A method according to any preceding claim, further comprising the step of sending data defining details of the image output apparatus from the second apparatus to the first apparatus (S2-18; S4-18), and wherein the calibration pattern data is generated by the first apparatus in dependence upon the details of the image output apparatus (S2-20; S4-20).

10. A method according to any preceding claim, further comprising the step of sending data defining a characteristic of the subject object from the second apparatus to the first apparatus (S2-18; S4-18), and wherein the calibration pattern data is generated by the first apparatus in dependence upon the characteristic of the subject object (S2-20; S4-20).

11. A method according to any preceding claim, wherein the image output apparatus comprises a printer (18) and wherein the generation of the calibration pattern using the data from the first apparatus comprises printing the calibration pattern using the printer.

12. A method according to claim 11, wherein the data sent from the first apparatus to the second apparatus for enabling the second apparatus to control a printing apparatus to print the calibration pattern defines the calibration pattern as a plurality of respective parts to be printed on separate recording media.

13. A method according to any of claims 1 to 10, wherein the image output apparatus comprises a display (19), and wherein the generation of the calibration pattern using the data from the first apparatus comprises displaying the calibration pattern on the display.

14. A method according to any preceding claim, wherein the computer processing apparatus are connected and data is transmitted therebetween via the Internet (8).

15. A method according to claim 2 or claim 3, further comprising:
using the data defining the three-dimensional computer model to generate data for controlling an apparatus to create a physical model of the subject object.

16. A method according to claim 2, claim 3 or claim 15, further comprising:
using the data defining the three-dimensional computer model to generate a physical model of the subject object.

17. A method of processing image data in a computer processing apparatus (6), **characterised by**:
sending data from the apparatus to a second computer processing apparatus (2, 4) defining a calibration pattern of distinguishable features (S2-24; S4-24), thereby to enable the second apparatus to generate the calibration pattern using an image output apparatus (18, 19), and storing data defining the calibration pattern for subsequent use (S2-20; S4-20);
receiving data defining a plurality of images of the subject object and calibration pattern recorded with imaging means at different relative orientations (S2-34; S4-36); and
performing processing on the basis of the stored data defining the calibration pattern to calculate the orientation at which at least some of the images were recorded (S2-36; S4-38).

18. A method according to claim 17, further comprising:
performing processing using the calculated orientations to generate data defining a three-dimensional computer model of the subject object (S2-38).

19. A method according to claim 18, further comprising:
using the data defining the three-dimensional computer model to generate data for controlling an apparatus to create a physical model of the subject object.

20. A method according to claim 18 or claim 19, further comprising:
using the data defining the three-dimensional computer model to generate a physical model of the subject object.

21. A method according to claim 17, further comprising:
sending data defining the calculated orientations to a 3D modelling apparatus (S4-40) to enable the 3D modelling apparatus to perform processing using the calculated orientations to generate data defining a three-dimensional computer model of the subject object.

22. A method according to claim 17, further comprising:
performing processing using the calculated orientations to generate data for controlling an apparatus to create a physical model of the subject object.

23. A method according to any of claims 17 to 22, wherein the data defining the images is received from the second apparatus.

24. A method according to any of claims 17 to 22, wherein the data defining the images is received from a third apparatus.

25. A method according to claim 21, wherein the 3D modelling apparatus is the second apparatus to which the calibration pattern data is sent.

26. A method according to claim 21 or claim 25, wherein image data for images for which the orientation of the imaging means has been calculated is sent to the 3D modelling apparatus together with the data defining the calculated orientations.

27. A method according to any of claims 17 to 26, wherein data defining details of the image output apparatus is received from the second apparatus, and the data defining the calibration pattern sent to the second apparatus is generated in dependence upon the details of the image output apparatus (S2-20; S4-20).

28. A method according to any of claims 17 to 27, wherein data defining a characteristic of the subject object is received from the second apparatus, and wherein the data defining the calibration pattern sent to the second apparatus is generated in dependence upon the characteristic of the subject object (S2-20; S4-20).

29. A method according to any of claims 17 to 28, wherein the image output apparatus comprises a printer (18) and wherein the data sent to the second apparatus comprises data to enable the second apparatus to print the calibration pattern using the printer.

30. A method according to claim 29, wherein the data sent to the second apparatus defining the calibration pattern defines the calibration pattern as a plurality of respective parts to be printed on separate recording media.

31. A method according to any of claims 17 to 28, wherein the image output apparatus comprises a display (19) and wherein the data sent to the second apparatus comprises data to enable the second apparatus to display the calibration pattern on the display.

32. A method according to any of claims 17 to 31, wherein data is received from and sent via the Internet (8).

33. A processing method performed by a computer processing apparatus (2, 4), **characterised by**:
receiving data from a second computer processing apparatus defining a calibration pattern of distinguishable features (S2-26; S4-26);
controlling an image output apparatus to generate the calibration pattern (S2-28; S4-28);
receiving data defining a plurality of images of the subject object and calibration pattern recorded with imaging means at different relative orientations (S2-30; S4-30); and
sending data defining the images to the second apparatus (S2-32; S4-34).

34. A method according to claim 33, further comprising:
receiving data from the second apparatus defining the orientation at which at least some of the images were recorded (S4-42); and
performing processing using the orientations to generate data defining a three-dimensional computer model of the subject object (S4-44).

35. A method according to claim 33, further comprising:
performing processing using the calculated orientations to generate data for controlling an apparatus to create a physical model of the subject object.

36. A method according to claim 34, further comprising:
using the data defining the three-dimensional computer model to generate data for controlling an apparatus to create a physical model of the subject object.

37. A method according to claim 34 or claim 36, further comprising:
using the data defining the three-dimensional computer model to generate a physical model of the subject object.

38. A method according to any of claims 34, 36 and 37, wherein image data for each image for which the orientation of the imaging means has been calculated is received from the second processing apparatus together with the data defining the orientations.

39. A method according to any of claims 33 to 38, further comprising the step of sending data defining details of the image output apparatus to the second apparatus to facilitate the generation of the data defining the calibration pattern (S2-18; S4-18).

40. A method according to any of claims 33 to 39, further comprising the step of sending data defining a characteristic of the subject object to the second apparatus to facilitate the generation of the data defining the calibration pattern (S2-18; S4-18).

41. A method according to any of claims 33 to 40,
wherein the image output apparatus comprises a printer (18), and wherein the generation of the calibration pattern using the image output apparatus comprises printing the calibration pattern.

42. A method according to claim 41, wherein the calibration pattern data received from the second computer processing apparatus defines the calibration pattern as a plurality of respective parts to be printed on separate recording media, and wherein the printer is controlled to print the calibration pattern as a plurality of respective parts on a plurality of recording media.

43. A method according to any of claims 33 to 40, wherein the image output apparatus comprises a display (19), and wherein the generation of the calibration pattern using the image output apparatus comprises displaying the calibration pattern.

44. A method according to any of claims 33 to 43, wherein data is received from and sent to the second apparatus via the Internet (8).

45. A system for processing image data using at least first (6) and second (2, 4) connected computer processing apparatus, **characterised in that:**
the first apparatus (6) comprises:
means (38) for generating and sending to the second apparatus data defining a calibration pattern of distinguishable features to enable the second apparatus to generate the calibration pattern with an image output apparatus (18, 19);
means (32) for storing data defining the calibration pattern for subsequent use;
means (34) for receiving data defining a plurality of images of the subject object and calibration pattern recorded with imaging means at different relative orientations; and
means (40) for performing processing on the basis of the stored data defining the calibration pattern to calculate the orientation at which at least some of the images were recorded;
and wherein the second apparatus (2, 4) comprises:
means for receiving the calibration pattern data from the first apparatus; and
means for controlling an image output apparatus (18, 19) to generate the calibration pattern in accordance with the data from the first apparatus to enable the recording of a plurality of images of the subject object and calibration pattern with imaging means at different relative orientations.

46. A system according to claim 45, wherein the first apparatus (6) further comprises:
means (42) for performing processing using the calculated orientations to generate data defining a three-dimensional computer model of the subject object.

47. A system according to claim 45, wherein:
the system further comprises a 3D modelling apparatus (2, 4) comprising means (42) for performing processing using the calculated orientations to generate data defining a three-dimensional computer model of the subject object; and
the first apparatus (6) further comprises means (34) for sending data defining the calculated orientations to the 3D modelling apparatus.

48. A system according to claim 47, wherein the 3D modelling apparatus is the second apparatus to which the calibration pattern data is sent.

49. A system according to any of claims 45 to 48, wherein:
the second apparatus (2, 4) further comprises means for sending data defining details of the image output apparatus (18, 19) to the first apparatus (6); and
the first apparatus (6) is arranged to generate the calibration pattern data in dependence upon the details of the image output apparatus (18, 19).

50. A system according to any of claims 45 to 49, wherein:
the second apparatus (2, 4) further comprises means for sending data defining a characteristic of the subject object to the first apparatus (6); and
the first apparatus (6) is arranged to generate the calibration pattern data in dependence upon the characteristic of the subject object.

51. A system according to any of claims 45 to 50, wherein:
the means for controlling an image output apparatus is operable to control a printer (18) to print the calibration pattern in accordance with the data from the first apparatus (6); and
the means (38) for generating and sending to the second apparatus data defining a calibration pattern is operable to generate and send data to enable the second apparatus to print the calibration pattern using a printer (18).

52. A system according to claim 51, wherein the means (38) for generating and sending the calibration pattern data in the first apparatus is arranged to generate the data to define the calibration pattern as a plurality of respective parts to be printed on separate recording media.

53. A system according to any of claims 45 to 50, wherein:
the means for controlling an image output apparatus is operable to control a display apparatus (19) to display the calibration pattern in accordance with the data from the first apparatus (6); and
the means (38) for generating and sending to the second apparatus data defining a calibration pattern is operable to generate and send data to enable the second apparatus to display the calibration pattern using the display apparatus (19).

54. Apparatus for processing image data (6), **characterised by**:
means (38) for generating and sending data to a second computer processing apparatus defining a calibration pattern of distinguishable features to enable the second apparatus to generate the calibration pattern with an image output apparatus;
means (32) for storing data defining the calibration pattern for subsequent use;
means (34) for receiving data defining a plurality of images of the subject object and calibration pattern recorded with imaging means at different relative orientations; and
means (40) for performing processing on the basis of the stored data defining the calibration pattern to calculate the orientation at which at least some of the images were recorded.

55. Apparatus according to claim 54, further comprising:
means (42) for performing processing using the calculated orientations to generate data defining a three-dimensional computer model of the subject object.

56. Apparatus according to claim 55, further comprising:
means (34) for sending data defining the calculated orientations to a 3D modelling apparatus to enable the 3D modelling apparatus to perform processing using the calculated orientations to generate data defining a three-dimensional computer model of the subject object.

57. Apparatus according to any of claims 54 to 56, wherein the means (38) for generating the calibration pattern data is arranged to generate the data in dependence upon details of the image output apparatus received from the second apparatus.

58. Apparatus according to any of claims 54 to 57, wherein the means (38) for generating the calibration pattern data is arranged to generate the data in dependence upon data defining a characteristic of the subject object received from the second apparatus.

59. Apparatus according to any of claims 54 to 58, wherein the means (38) for generating the calibration pattern data is operable to generate the data to enable the second apparatus (2) to print the calibration pattern with a printer (18).

60. Apparatus according to claim 59, wherein the means (38) for generating the calibration pattern data is arranged to generate the data to define the calibration pattern as a plurality of respective parts to be printed on separate recording media.

61. Apparatus according to any of claims 54 to 58, wherein the means (38) for generating the calibration pattern data is operable to generate the data to enable the second apparatus (4) to display the calibration pattern on the display (19).

62. A storage medium (10) storing computer program instructions to program a programmable processing apparatus to become operable to perform a method as set out in at least one of claims 17 to 32.

63. A signal (12) conveying computer program instructions to program a programmable processing apparatus to become operable to perform a method as set out in at least one of claims 17 to 32.

## Patentansprüche

1. Verfahren zum Verarbeiten von Bilddaten, **gekennzeichnet durch**:
Senden (S2-24, S4-24) von Kalibriermuster-Daten von einer ersten Vorrichtung (6) zu einer zweiten Vorrichtung (2, 4), um die Generierung eines Kalibriermusters unterscheidbarer Merkmale **durch** die zweite Vorrichtung zu ermöglichen unter Verwendung einer Bildausgabevorrichtung (18, 19), und Speichern von Daten in der ersten Vorrichtung, welche das Kalibriermuster für eine spätere Verwendung (S2-20, S4-20) definieren;
Generieren des Kalibriermusters unter Verwendung der Bildausgabevorrichtung und der Daten von der ersten Vorrichtung (S2-28, S4-28);
Aufzeichnen mehrerer Bilder des Bearbeitungsobjekts und eines Kalibriermusters mit einer bildgebenden Einrichtung bei verschiedenen relativen Orientierungen, und Senden von die Bilder definierenden Daten an die erste Vorrichtung (S2-32; S4-34); und
Ausführen einer Verarbeitung in der ersten Vorrichtung auf der Grundlage der das Kalibriermuster definierenden, gespeicherten Daten, um diejenigen Orientierungen zu berechnen, mit denen zumindest einige der Bilder aufgezeichnet wurden (S2-36; S4-38).

2. Verfahren nach Anspruch 1, weiterhin umfassend:
Ausführen der Verarbeitung in der ersten Vorrichtung unter Verwendung der berechneten Orientierungen, um Daten zu generieren, die ein dreidimensionales Computermodell des Bearbeitungsobjekts definieren (S2-38).

3. Verfahren nach Anspruch 1, weiterhin umfassend:
Senden von die berechneten Orientierungen definierenden Daten von der ersten Vorrichtung an eine 3D-Modelliervorrichtung (S4-40); und
Ausführen einer Verarbeitung in der 3D-Modelliervorrichtung unter Verwendung der berechneten Orientierungen, um Daten zu generieren, die ein dreidimensionales Computermodell des Bearbeitungsobjekts definieren (S4-44).

4. Verfahren nach Anspruch 1, weiterhin umfassend:
Ausführen der Verarbeitung unter Verwendung der berechneten Orientierungen, um Daten zum Steuern einer Vorrichtung zwecks Schaffung eines physikalischen Modells des Bearbeitungsobjekts zu generieren.

5. Verfahren nach einem vorhergehenden Anspruch, wobei die die Bilder definierenden Daten von der zweiten Vorrichtung zu der ersten Vorrichtung gesendet werden.

6. Verfahren nach einem der Ansprüche 1 bis 4, wobei die die Bilder definierenden Daten von einer dritten Vorrichtung zu der ersten Vorrichtung gesendet werden.

7. Verfahren nach Anspruch 3, wobei die 3D-Modelliervorrichtung die zweite Vorrichtung ist, der die Kalibriermuster-Daten von der ersten Vorrichtung zugesendet werden.

8. Verfahren nach Anspruch 3 oder Anspruch 7, wobei Bilddaten für jedes Bild, für welches die Orientierung der bildgebenden Einrichtung berechnet wurde, von der ersten Verarbeitungsvorrichtung an die 3D-Modelliervorrichtung zusammen mit den Daten gesendet werden, welche die berechneten Orientierungen definieren.

9. Verfahren nach einem der vorhergehenden Ansprüche, weiterhin umfassend den Schritt des Sendens von Daten, die Einzelheiten der Bildausgabevorrichtung definieren, von der zweiten Vorrichtung zu der ersten Vorrichtung (S2-18; S4-18), wobei die Kalibriermuster-Daten von der ersten Vorrichtung abhängig von den Einzelheiten der Bildausgabevorrichtung generiert werden (S2-20, S4-20).

10. Verfahren nach einem der vorhergehenden Ansprüche, weiterhin umfassend den Schritt des Sendens von Daten, die eine Kenngröße des Bearbeitungsobjekts definieren, von der zweiten Vorrichtung zu der ersten Vorrichtung (S2-18; S4-18), wobei die Kalibriermuster-Daten von der ersten Vorrichtung abhängig von der Kenngröße des Bearbeitungsobjekts generiert werden (S2-20, S4-20).

11. Verfahren nach einem der vorhergehenden Ansprüche, wobei die Bildausgabevorrichtung einen Drucker (18) umfasst und das Generieren des Kalibriermusters unter Verwendung der Daten von der ersten Vorrichtung das Drucken des Kalibriermusters unter Verwendung des Druckers umfasst.

12. Verfahren nach Anspruch 11, wobei die von der ersten Vorrichtung zu der zweiten Vorrichtung gesendeten Daten, die die zweite Vorrichtung in die Lage versetzen, eine Druckvorrichtung zum Drucken des Kalibriermusters zu steuern, das Kalibriermuster definieren in Form mehrerer einzelner Teile, die auf getrennten Aufzeichnungsmedien zu drucken sind.

13. Verfahren nach einem der Ansprüche 1 bis 10, wobei die Bildausgabevorrichtung eine Anzeige (19) umfasst und das Generieren des Kalibriermusters unter Verwendung der Daten von der ersten Vorrichtung das Anzeigen des Kalibriermusters auf der Anzeige umfasst.

14. Verfahren nach einem der vorhergehenden Ansprüche, wobei die erste und zweite Vorrichtung Computerverarbeitungsvorrichtungen sind, verbunden, und Daten zwischen ihnen übertragen werden, über das Internet (8).

15. Verfahren nach Anspruch 2 oder Anspruch 3, weiterhin umfassend:
Verwenden der das dreidimensionale Computermodell definierenden Daten zum Generieren von Daten zum Steuern einer Vorrichtung zwecks Schaffung eines physikalischen Modells des Bearbeitungsobjekts.

16. Verfahren nach Anspruch 2, Anspruch 3 oder Anspruch 15, weiterhin umfassend:
das Verwenden der das dreidimensionale Computermodell definierenden Daten zum Generieren eines physikalischen Modells des Bearbeitungsobjekts.

17. Verfahren zum Verarbeiten von Bilddaten in einer Computerverarbeitungsvorrichtung (6), **gekennzeichnet durch**:
Senden von Daten von der Vorrichtung zu einer zweiten Computerverarbeitungsvorrichtung (2, 4), die ein Kalibriermuster unterscheidbarer Merkmale definieren (S2-24; S4-24), um **dadurch** die zweite Vorrichtung in die Lage zu versetzen, das Kalibriermuster zu generieren unter Verwendung einer Bildausgabevorrichtung (18, 19), und Speichern der das Kalibriermuster definierenden Daten für spätere Verwendung (S2-20; S4-20);
Empfangen von Daten, die mehrere Bilder des Bearbeitungsobjekts und eines Kalibriermusters definieren, welches mit einer bildgebenden Einrichtung bei verschiedenen relativen Orientierungen aufgezeichnet wurde (S2-34; S4-36); und
Ausführen einer Verarbeitung auf der Grundlage der gespeicherten Daten, die das Kalibriermuster definieren, um die Orientierung zu berechnen, unter der zumindest einige der Bilder aufgezeichnet wurden (S2-36; S4-38).

18. Verfahren nach Anspruch 17, weiterhin umfassend:
Ausführen einer Verarbeitung unter Verwendung der berechneten Orientierungen, um Daten zu generieren, die ein dreidimensionales Computermodell des Bearbeitungsobjekts (S2-38) definieren.

19. Verfahren nach Anspruch 18, weiterhin umfassend:
Verwenden der das dreidimensionale Computermodell definierenden Daten, um Daten zu generieren zur Steuerung einer Vorrichtung zwecks Schaffung eines physikalischen Modells des Bearbeitungsobjekts.

20. Verfahren nach Anspruch 18 oder Anspruch 19, weiterhin umfassend:
Verwenden der das dreidimensionale Computermodell definierenden Daten zum Generieren eines physikalischen Modells des Bearbeitungsobjekts.

21. Verfahren nach Anspruch 17, weiterhin umfassend:
Senden von Daten, die die berechneten Orientierungen definieren, zu einer 3D-Modelliervorrichtung (S4-40), um diese in die Lage zu versetzen, eine Verarbeitung unter Verwendung der berechneten Orientierungen auszuführen und so Daten zu generieren, die ein dreidimensionales Computermodell des Bearbeitungsobjekts definieren.

22. Verfahren nach Anspruch 17, weiterhin umfassend:
Ausführen einer Verarbeitung unter Verwendung der berechneten Orientierungen zum Generieren von Daten zum Steuern einer Vorrichtung zwecks Schaffung eines physikalischen Modells des Bearbeitungsobjekts.

23. Verfahren nach einem der Ansprüche 17 bis 22, wobei die die Bilder definierenden Daten von der zweiten Vorrichtung empfangen werden.

24. Verfahren nach einem der Ansprüche 17 bis 22, wobei die die Bilder definierenden Daten von einer dritten Vorrichtung empfangen werden.

25. Verfahren nach Anspruch 21, wobei die 3D-Modelliervorrichtung die zweite Vorrichtung ist, zu der die Kalibriermuster-Daten gesendet werden.

26. Verfahren nach Anspruch 21 oder Anspruch 25, wobei Bilddaten für Bilder, für die die Orientierung der bildgebenden Einrichtung berechnet wurde, zusammen mit Daten, die die berechneten Orientierungen definieren, zu der 3D-Modelliervorrichtung gesendet werden.

27. Verfahren nach einem der Ansprüche 17 bis 26, wobei Daten, die Einzelheiten der Bildausgabevorrichtung definieren, von der zweiten Vorrichtung empfangen werden und die das Kalibriermuster definierenden Daten, die zu der zweiten Vorrichtung gesendet werden, abhängig von den Einzelheiten der Bildausgabevorrichtung generiert werden (S2-20, S4-20).

28. Verfahren nach einem der Ansprüche 17 bis 27, wobei Daten, die eine Kenngröße des Bearbeitungsobjekts definieren, von der zweiten Vorrichtung empfangen werden und die das Kalibriermuster definierenden Daten, die zu der zweiten Vorrichtung gesendet werden, abhängig von der Kenngröße des Bearbeitungsobjekts generiert werden (S2-20, S4-20).

29. Verfahren nach einem der Ansprüche 17 bis 28,
wobei die Bildausgabevorrichtung einen Drucker (18) umfasst und die zu der zweiten Vorrichtung gesendeten Daten Daten umfassen, welche die zweite Vorrichtung in die Lage versetzen, unter Verwendung des Druckers das Kalibriermuster zu drucken.

30. Verfahren nach Anspruch 29, wobei die zu der zweiten Vorrichtung gesendeten Daten, die das Kalibriermuster definieren, das Kalibriermuster in Form mehrerer einzelner auf getrennten Aufzeichnungsmedien zu druckenden Teilen definieren.

31. Verfahren nach einem der Ansprüche 17 bis 28, wobei die Bildausgabevorrichtung eine Anzeige (19) umfasst und die zu der zweiten Vorrichtung gesendeten Daten Daten umfassen, die die zweite Vorrichtung in die Lage versetzen, das Kalibriermuster auf der Anzeige anzuzeigen.

32. Verfahren nach einem der Ansprüche 17 bis 31, wobei die Daten über das Internet (8) empfangen und gesendet werden.

33. Von einer Computerverarbeitungsvorrichtung (2, 4) ausgeführtes Verarbeitungsverfahren, **gekennzeichnet durch**:
Empfangen von Daten von einer zweiten Computerverarbeitungsvorrichtung, welche ein Kalibriermuster unterscheidbarer Merkmale definieren (S2-26, S4-26),
Steuern einer Bildausgabevorrichtung, um das Kalibriermuster zu generieren (S2-28, S4-28);
Empfangen von Daten, die mehrere Bilder des Bearbeitungsobjekts und ein Kalibriermuster definieren, welches von einer bildgebenden Einrichtung bei verschiedenen relativen Orientierungen aufgezeichnet wurde (S2-30, S4-30); und
Senden von die Bilder definierenden Daten zu der zweiten Vorrichtung (S2-32, S4-34).

34. Verfahren nach Anspruch 33, weiterhin umfassend:
Empfangen von Daten von der zweiten Vorrichtung, welche die Orientierung definieren, mit der zumindest einige der Bilder aufgezeichnet wurden (S4-42); und
Ausführen einer Verarbeitung unter Verwendung der Orientierungen, um Daten zu generieren, die ein dreidimensionales Computermodell des Bearbeitungsobjekts definieren (S4-44).

35. Verfahren nach Anspruch 33, weiterhin umfassend:
Ausführen einer Verarbeitung unter Verwendung der berechneten Orientierungen, um Daten zum Steuern einer Vorrichtung zwecks Schaffung eines physikalischen Modells des Bearbeitungsobjekts zu generieren.

36. Verfahren nach Anspruch 34, weiterhin umfassend:
Verwenden der das dreidimensionale Computermodell definierenden Daten, um Daten zu generieren zur Steuerung einer Vorrichtung zwecks Schaffung eines physikalischen Modells des Bearbeitungsobjekts.

37. Verfahren nach Anspruch 34 oder Anspruch 36, weiterhin umfassend:
Verwenden der das dreidimensionale Computermodell definierenden Daten zum Generieren eines physikalischen Modells des Bearbeitungsobjekts.

38. Verfahren nach einem der Ansprüche 34, 36 und 37, wobei Bilddaten für jedes Bild, für welches die Orientierung der bildgebenden Einrichtung berechnet wurde, von der zweiten Verarbeitungsvorrichtung zusammen mit die Orientierungen definierenden Daten empfangen werden.

39. Verfahren nach einem der Ansprüche 33 bis 38,
weiterhin umfassend den Schritt des Sendens von Daten, die Einzelheiten der Bildausgabevorrichtung definieren, zu der zweiten Vorrichtung, um die Generierung von das Kalibriermuster definierenden Daten zu erleichtern (S2-18; S4-18).

40. Verfahren nach einem der Ansprüche 33 bis 39, weiterhin umfassend den Schritt des Sendens von Daten, die eine Kenngröße des Bearbeitungsobjekts definieren, zu der zweiten Vorrichtung, um die Generierung der das Kalibriermuster definierenden Daten zu erleichtern (S2-18; S4-18).

41. Verfahren nach einem der Ansprüche 33 bis 40, wobei die Bildausgabevorrichtung einen Drucker (18) umfasst und das Generieren des Kalibriermusters unter Verwendung der Bildausgabevorrichtung das Drucken des Kalibriermusters umfasst.

42. Verfahren nach Anspruch 41, wobei die von der zweiten Computerverarbeitungsvorrichtung empfangenen Kalibriermuster-Daten das Kalibriermuster in Form mehrerer einzelner auf separaten Aufzeichnungsmedien zu druckender Teile definiert, wobei der Drucker so gesteuert wird, dass er das Kalibriermuster in Form mehrerer einzelner Teile auf mehreren Aufzeichnungsmedien druckt.

43. Verfahren nach einem der Ansprüche 33 bis 40, wobei die Bildausgabevorrichtung eine Anzeige (19) umfasst und das Generieren des Kalibriermusters unter Verwendung der Bildausgabevorrichtung das Anzeigen des Kalibriermusters umfasst.

44. Verfahren nach einem der Ansprüche 33 bis 43, wobei Daten von der zweiten Vorrichtung empfangen und zu ihr über das Internet (8) gesendet werden.

45. System zum Verarbeiten von Bilddaten unter Verwendung von zumindest einer ersten (6) und einer zweiten (2, 4) verbundenen Computerverarbeitungsvorrichtung, **dadurch gekennzeichnet, dass**:
die erste Vorrichtung (6) umfasst:
eine Einrichtung (38) zum Generieren und Senden von Daten, die ein Kalibriermuster unterscheidbarer Merkmale definieren, zu der zweiten Vorrichtung, um diese in die Lage zu versetzen, das Kalibriermuster mit einer Bildausgabevorrichtung (18, 19) zu generieren;
eine Einrichtung (32) zum Speichern von das Kalibriermuster definierenden Daten zur späteren Verwendung;
eine Einrichtung (34) zum Empfangen von Daten, die mehrere Bilder des Bearbeitungsobjekts und ein mit einer bildgebenden Einrichtung bei verschiedenen relativen Orientierungen aufgezeichnetes Kalibriermuster definieren; und
eine Einrichtung (40) zum Ausführen einer Verarbeitung auf der Grundlage der das Kalibriermuster definierenden gespeicherten Daten, um die Orientierung zu berechnen, unter der zumindest einige der Bilder aufgezeichnet wurden;
und die zweite Vorrichtung (2, 4) umfasst:
eine Einrichtung zum Empfangen von Kalibriermuster-Daten von der ersten Vorrichtung; und
eine Einrichtung zum Steuern einer Bildausgabevorrichtung (18, 19) zum Generieren des Kalibriermusters nach Maßgabe der von der ersten Vorrichtung erhaltenen Daten, um die Aufzeichnung mehrerer Bilder des Bearbeitungsobjekts und eines Kalibriermusters mit einer bildgebenden Einrichtung bei verschiedenen relativen Orientierungen zu ermöglichen.

46. System nach Anspruch 45, wobei die erste Vorrichtung (6) weiterhin umfasst:
eine Einrichtung (42) zum Ausführen einer Verarbeitung unter Verwendung der berechneten Orientierungen, um Daten zu generieren, die ein dreidimensionales Computermodell des Bearbeitungsobjekts definieren.

47. System nach Anspruch 45, wobei:
das System weiterhin eine 3D-Modelliervorrichtung (2, 4) mit einer Einrichtung (42) zum Ausführen einer Verarbeitung unter Verwendung der berechneten Orientierungen zwecks Generierung von Daten umfasst, welche ein dreidimensionales Computermodell des Bearbeitungsobjekts definieren; und
die erste Vorrichtung (6) weiterhin eine Einrichtung (34) umfasst zum Senden von Daten, die die berechneten Orientierungen definieren, zu der 3D-Modelliervorrichtung.

48. System nach Anspruch 47, wobei die 3D-Modelliervorrichtung die zweite Vorrichtung ist, zu der die Kalibriermuster-Daten gesendet werden.

49. System nach einem der Ansprüche 45 bis 48, wobei:
die zweite Vorrichtung (2, 4) weiterhin eine Einrichtung umfasst zum Senden von Einzelheiten der Bildausgabevorrichtung (18, 19) definierenden Daten an die erste Vorrichtung (6) und
die erste Vorrichtung (6) dazu ausgebildet ist, die Kalibriermuster-Daten abhängig von den Einzelheiten der Bildausgabevorrichtung (18, 19) zu generieren.

50. System nach einem der Ansprüche 45 bis 49, wobei:
die zweite Vorrichtung (2, 4) weiterhin eine Einrichtung umfasst zum Senden von eine Kenngröße des Bearbeitungsobjekts definierenden Daten an die erste Vorrichtung und
die erste Vorrichtung (6) dazu ausgebildet ist, die Kalibriermuster-Daten abhängig von der Kenngröße des Bearbeitungsobjekts zu generieren.

51. System nach einem der Ansprüche 45 bis 50, wobei:
die Einrichtung zum Steuern einer Bildausgabevorrichtung betreibbar ist zum Steuern eines Druckers (18), um das Kalibriermuster nach Maßgabe der von der ersten Vorrichtung (6) erhaltenen Daten zu drucken; und
die Einrichtung (38) zum Generieren und zum Senden von ein Kalibriermuster definierenden Daten an die zweite Vorrichtung betreibbar ist zum Generieren und Senden von Daten, welche die zweite Vorrichtung in die Lage versetzen, das Kalibriermuster unter Verwendung eines Druckers (18) zu drucken.

52. System nach Anspruch 51, wobei die Einrichtung (38) zum Generieren und Senden der Kalibriermuster-Daten in der ersten Vorrichtung dazu ausgebildet ist, die Daten zu generieren, um das Kalibriermuster zu definieren in Form mehrerer einzelner Teile, die auf getrennten Aufzeichnungsmedien zu drucken sind.

53. System nach einem der Ansprüche 45 bis 50, wobei:
die Einrichtung zum Steuern der Bildausgabevorrichtung betreibbar ist zum Steuern einer Anzeigevorrichtung (19) zum Anzeigen des Kalibriermusters nach Maßgabe der von der ersten Vorrichtung (6) kommenden Daten und
die Einrichtung (38) zum Generieren und zum Senden von ein Kalibriermuster definierenden Daten an die zweite Vorrichtung betreibbar ist zum Generieren und Senden von Daten, um die zweite Vorrichtung in die Lage zu versetzen, das Kalibriermuster unter Verwendung der Anzeigevorrichtung (19) anzuzeigen.

54. Vorrichtung zum Verarbeiten von Bilddaten (6), **gekennzeichnet durch**:
eine Einrichtung (38) zum Generieren und Senden von Daten, die ein Kalibriermuster unterscheidbarer Merkmale definieren, an eine zweite Computerverarbeitungsvorrichtung, um die zweite Vorrichtung in die Lage zu versetzen, das Kalibriermuster mit einer Bildausgabevorrichtung zu generieren;
eine Einrichtung (32) zum Speichern von das Kalibriermuster definierenden Daten für spätere Verwendung;
eine Einrichtung (34) zum Empfangen von Daten, die mehrere Bilder des Bearbeitungsobjekts definieren, und eines Kalibriermusters, das mit einer bildgebenden Einrichtung bei verschiedenen relativen Orientierungen aufgezeichnet wird; und
eine Einrichtung (40) zum Ausführen einer Verarbeitung auf der Grundlage der gespeicherten Daten, die das Kalibriermuster definieren, um die Orientierung zu berechnen, unter der zumindest einige der Bilder aufgezeichnet wurden.

55. Vorrichtung nach Anspruch 54, weiterhin umfassend:
eine Einrichtung (42) zum Ausführen einer Verarbeitung unter Verwendung der berechneten Orientierungen, um Daten zu generieren, die ein dreidimensionales Computermodell des Bearbeitungsobjekts definieren.

56. Vorrichtung nach Anspruch 55, weiterhin umfassend:
eine Einrichtung (34) zum Senden von die berechneten Orientierungen definierenden Daten an eine 3D-Modelliervorrichtung, um diese in die Lage zu versetzen, eine Verarbeitung unter Verwendung der berechneten Orientierungen auszuführen und so Daten zu generieren, die ein dreidimensionales Computermodell des Bearbeitungsobjekts definieren.

57. Vorrichtung nach einem der Ansprüche 54 bis 56, wobei die Einrichtung (38) zum Generieren der Kalibriermuster-Daten dazu ausgebildet ist, die Daten abhängig von Einzelheiten der Bildausgabevorrichtung, die von der zweiten Vorrichtung empfangen wurden, zu generieren.

58. Vorrichtung nach einem der Ansprüche 54 bis 57, wobei die Einrichtung (38) zum Generieren der Kalibriermuster-Daten dazu ausgebildet ist, die Daten abhängig von Daten zu generieren, welche eine Kenngröße des Bearbeitungsobjekts definieren und von der zweiten Vorrichtung empfangen wurden.

59. Vorrichtung nach einem der Ansprüche 54 bis 58, wobei die Einrichtung (38) zum Generieren der Kalibriermuster-Daten betreibbar ist zum Generieren der Daten, um die zweite Vorrichtung (2) in die Lage zu versetzen, das Kalibriermuster mit einem Drucker (18) zu drucken.

60. Vorrichtung nach Anspruch 59, wobei die Einrichtung (38) zum Generieren der Kalibriermuster-Daten dazu ausgebildet ist, die Daten zum Definieren des Kalibriermusters in Form mehrerer einzelner Teile zu generieren, die auf getrennten Aufzeichnungsmedien zu drucken sind.

61. Vorrichtung nach einem der Ansprüche 54 bis 58, wobei die Einrichtung (38) zum Generieren der Kalibriermuster-Daten betreibbar ist zum Generieren der Daten, um die zweite Vorrichtung (4) in die Lage zu versetzen, das Kalibriermuster auf der Anzeige (19) anzuzeigen.

62. Speichermedium (10) mit gespeicherten Computerprogramm-Befehlen zum Programmieren einer programmierbaren Verarbeitungsvorrichtung, demzufolge diese betreibbar ist zum Ausführen eines Verfahrens gemäß zumindest einem der Ansprüche 17 bis 32.

63. Signal (12) zum Transportieren von Computerprogramm-Befehlen zum Programmieren einer programmierbaren Verarbeitungsvorrichtung, demzufolge diese betreibbar ist zum Ausführen eines Verfahrens gemäß zumindest einem der Ansprüche 17 bis 32.

## Revendications

1. Procédé de traitement de données d'images, **caractérisé par** le fait :
d'envoyer (S2-24 ; S4-24) depuis un premier appareil (6) à un deuxième appareil (2, 4) des données d'un modèle d'étalonnage afin de permettre la génération d'un modèle d'étalonnage de particularités différentiables par le deuxième appareil en utilisant un appareil (18, 19) de sortie d'images, et stocker des données dans le premier appareil définissant le modèle d'étalonnage pour une utilisation ultérieure (S2-20 ; S4-20) ;
de générer le modèle d'étalonnage en utilisant l'appareil de sortie d'images et les données provenant du premier appareil (S2-28 ; S4-28) ;
d'enregistrer plusieurs images de l'objet sujet et le modèle d'étalonnage avec un moyen d'imagerie à des orientations relatives différentes, et envoyer des données définissant les images au premier appareil (S2-32 ; S4-34) ; et
de mettre en oeuvre un traitement dans le premier appareil sur la base des données stockées définissant le modèle d'étalonnage pour calculer les orientations auxquelles au moins une partie des images ont été enregistrées (S2-36 ; S4-38).

2. Procédé selon la revendication 1, comprenant en outre le fait de :
mettre en oeuvre un traitement dans le premier appareil en utilisant les orientations calculées pour générer des données définissant un modèle informatique tridimensionnel de l'objet sujet (S2-38).

3. Procédé selon la revendication 1, comprenant en outre le fait :
d'envoyer des données définissant les orientations calculées du premier appareil à un appareil de modélisation en 3D (S4-40) ; et
de mettre en oeuvre un traitement dans l'appareil de modélisation en 3D en utilisant les orientations calculées pour générer des données définissant un modèle informatique tridimensionnel de l'objet sujet (S4-44).

4. Procédé selon la revendication 1, comprenant en outre le fait de :
mettre en oeuvre un traitement en utilisant les orientations calculées pour générer des données pour commander un appareil destiné à créer un modèle physique de l'objet sujet.

5. Procédé selon l'une quelconque des revendications précédentes, dans lequel les données définissant les images sont envoyées du deuxième appareil au premier appareil.

6. Procédé selon l'une quelconque des revendications 1 à 4, dans lequel les données définissant les images sont envoyées d'un troisième appareil au premier appareil.

7. Procédé selon la revendication 3, dans lequel l'appareil de modélisation en 3D est le deuxième appareil auquel les données du modèle d'étalonnage sont envoyées par le premier appareil.

8. Procédé selon la revendication 3 ou la revendication 7, dans lequel des données d'images pour chaque image pour laquelle l'orientation du moyen d'imagerie a été calculée sont envoyées du premier appareil de traitement à l'appareil de modélisation en 3D en même temps que les données définissant les orientations calculées.

9. Procédé selon l'une quelconque des revendications précédentes, comprenant en outre l'étape qui consiste à envoyer des données définissant des détails de l'appareil de sortie d'images du deuxième appareil au premier appareil (S2-18 ; S4-18), et où les données du modèle d'étalonnage sont générées par le premier appareil selon les détails de l'appareil de sortie d'images (S2-20 ; S4-20).

10. Procédé selon l'une quelconque des revendications précédentes, comprenant en outre l'étape qui consiste à envoyer des données définissant une caractéristique de l'objet sujet du deuxième appareil au premier appareil (S2-18 ; S4-18), et où les données du modèle d'étalonnage sont générées par le premier appareil selon la caractéristique de l'objet sujet (S2-20 ; S4-20).

11. Procédé selon l'une quelconque des revendications précédentes, dans lequel l'appareil de sortie d'images comprend une imprimante (18) et où la génération du modèle d'étalonnage en utilisant les données provenant du premier appareil comprend l'impression du modèle d'étalonnage en utilisant l'imprimante.

12. Procédé selon la revendication 11, dans lequel les données envoyées du premier appareil au deuxième appareil pour permettre au deuxième appareil de commander un appareil d'impression afin d'imprimer le modèle d'étalonnage définissent le modèle d'étalonnage comme une pluralité de parties respectives à imprimer sur des supports d'enregistrement séparés.

13. Procédé selon l'une quelconque des revendications 1 à 10, dans lequel l'appareil de sortie d'images comprend un écran (19), et où le fait de générer le modèle d'étalonnage en utilisant les données provenant du premier appareil comprend l'affichage du modèle d'étalonnage sur l'écran.

14. Procédé selon l'une quelconque des revendications précédentes, dans lequel les appareils de traitement informatiques sont connectés et des données sont transmises entre eux par le biais d'Internet (8).

15. Procédé selon la revendication 2 ou la revendication 3, comprenant en outre le fait :
d'utiliser les données définissant le modèle informatique tridimensionnel pour générer des données pour commander un appareil afin de créer un modèle physique de l'objet sujet.

16. Procédé selon la revendication 2, la revendication 3 ou la revendication 15, comprenant en outre le fait :
d'utiliser les données définissant le modèle informatique tridimensionnel afin de générer un modèle physique de l'objet sujet.

17. Procédé de traitement de données d'images dans un appareil de traitement informatique (6), **caractérisé par** le fait :
d'envoyer des données depuis l'appareil à un deuxième appareil de traitement informatique (2, 4) définissant un modèle d'étalonnage de particularités différentiables (S2-24 ; S4-24), permettant ainsi au deuxième appareil de générer le modèle d'étalonnage en utilisant un appareil (18, 19) de sortie d'images, et stocker des données définissant le modèle d'étalonnage pour une utilisation ultérieure (S2-20 ; S4-20) ;
de recevoir des données définissant plusieurs images de l'objet sujet et le modèle d'étalonnage enregistrées avec un moyen d'imagerie à des orientations relatives différentes (S2-34 ; S4-36) ; et
de mettre en oeuvre un traitement sur la base des données stockées définissant le modèle d'étalonnage pour calculer l'orientation à laquelle au moins une partie des images ont été enregistrées (S2-36 ; S4-38).

18. Procédé selon la revendication 17, comprenant en outre le fait :
de mettre en oeuvre un traitement en utilisant les orientations calculées afin de générer des données définissant un modèle informatique tridimensionnel de l'objet sujet (S2-38).

19. Procédé selon la revendication 18, comprenant en outre le fait :
d'utiliser les données définissant le modèle informatique tridimensionnel afin de générer des données pour commander un appareil pour créer un modèle physique de l'objet sujet.

20. Procédé selon la revendication 18 ou la revendication 19, comprenant en outre le fait :
d'utiliser les données définissant le modèle informatique tridimensionnel afin de générer un modèle physique de l'objet sujet.

21. Procédé selon la revendication 17, comprenant en outre le fait :
d'envoyer des données définissant les orientations calculées à un appareil de modélisation en 3D (S4-40) pour permettre à l'appareil de modélisation en 3D de mettre en oeuvre un traitement en utilisant les orientations calculées pour générer des données définissant un modèle informatique tridimensionnel de l'objet sujet.

22. Procédé selon la revendication 17, comprenant en outre le fait :
de mettre en oeuvre un traitement en utilisant les orientations calculées afin de générer des données pour commander un appareil pour créer un modèle physique de l'objet sujet.

23. Procédé selon l'une quelconque des revendications 17 à 22, dans lequel les données définissant les images sont reçues du deuxième appareil.

24. Procédé selon l'une quelconque des revendications 17 à 22, dans lequel les données définissant les images sont reçues d'un troisième appareil.

25. Procédé selon la revendication 21, dans lequel l'appareil de modélisation en 3D est le deuxième appareil auquel les données du modèle d'étalonnage sont envoyées.

26. Procédé selon la revendication 21 ou la revendication 25, dans lequel des données d'images pour des images pour lesquelles l'orientation du moyen d'imagerie a été calculée sont envoyées à l'appareil de modélisation en 3D en même temps que les données définissant les orientations calculées.

27. Procédé selon l'une quelconque des revendications 17 à 26, dans lequel des données définissant des détails de l'appareil de sortie d'images sont reçues du deuxième appareil, et les données définissant le modèle d'étalonnage envoyées au deuxième appareil sont générées selon les détails de l'appareil de sortie d'images (S2-20 ; S4-20).

28. Procédé selon l'une quelconque des revendications 17 à 27, dans lequel des données définissant une caractéristique de l'objet sujet sont reçues du deuxième appareil, et où les données définissant le modèle d'étalonnage envoyées au deuxième appareil sont générées selon la caractéristique de l'objet sujet (S2-20 ; S4-20).

29. Procédé selon l'une quelconque des revendications 17 à 28, dans lequel l'appareil de sortie d'images comprend une imprimante (18) et où les données envoyées au deuxième appareil comprennent des données permettant au deuxième appareil d'imprimer le modèle d'étalonnage en utilisant l'imprimante.

30. Procédé selon la revendication 29, dans lequel les données envoyées au deuxième appareil définissant le modèle d'étalonnage définissent le modèle d'étalonnage comme une pluralité de parties respectives à imprimer sur des supports d'enregistrement séparés.

31. Procédé selon l'une quelconque des revendications 17 à 28, dans lequel l'appareil de sortie d'images comprend un écran (19) et où les données envoyées au deuxième appareil comprennent des données permettant au deuxième appareil d'afficher le modèle d'étalonnage sur l'écran.

32. Procédé selon l'une quelconque des revendications 17 à 31, dans lequel des données sont reçues de et envoyées par Internet (8).

33. Procédé de traitement mis en oeuvre par un appareil de traitement informatique (2, 4), **caractérisé par** le fait :
de recevoir des données depuis un deuxième appareil de traitement informatique définissant un modèle d'étalonnage de particularités différentiables (S2-26 ; S4-26) ;
de commander un appareil de sortie d'images afin de générer le modèle d'étalonnage (S2-28 ; S4-28) ;
de recevoir des données définissant plusieurs images de l'objet sujet et le modèle d'étalonnage enregistrées avec un moyen d'imagerie à des orientations relatives différentes (S2-30 ; S4-30) ; et
d'envoyer des données définissant les images au deuxième appareil (S2-32 ; S4-34).

34. Procédé selon la revendication 33, comprenant en outre le fait :
de recevoir des données depuis le deuxième appareil définissant l'orientation à laquelle au moins une partie des images ont été enregistrées (S4-42) ; et
de mettre en oeuvre un traitement en utilisant les orientations pour générer des données définissant un modèle informatique tridimensionnel de l'objet sujet (S4-44).

35. Procédé selon la revendication 33, comprenant en outre le fait :
de mettre en oeuvre un traitement en utilisant les orientations calculées afin de générer des données pour commander un appareil pour créer un modèle physique de l'objet sujet.

36. Procédé selon la revendication 34, comprenant en outre le fait :
d'utiliser les données définissant le modèle informatique tridimensionnel pour générer des données pour commander un appareil pour créer un modèle physique de l'objet sujet.

37. Procédé selon la revendication 34 ou la revendication 36, comprenant en outre le fait :
d'utiliser les données définissant le modèle informatique tridimensionnel pour générer un modèle physique de l'objet sujet.

38. Procédé selon l'une quelconque des revendications 34, 36 et 37, dans lequel des données d'images pour chaque image pour laquelle l'orientation du moyen d'imagerie a été calculée sont reçues du deuxième appareil de traitement en même temps que les données définissant les orientations.

39. Procédé selon l'une quelconque des revendications 33 à 38, comprenant en outre l'étape qui consiste à envoyer des données définissant des détails de l'appareil de sortie d'images au deuxième appareil afin de faciliter la génération des données définissant le modèle d'étalonnage (S2-18 ; S4-18).

40. Procédé selon l'une quelconque des revendications 33 à 39, comprenant en outre l'étape qui consiste à envoyer des données définissant une caractéristique de l'objet sujet au deuxième appareil afin de faciliter la génération des données définissant le modèle d'étalonnage (S2-18 ; S4-18).

41. Procédé selon l'une quelconque des revendications 33 à 40, dans lequel l'appareil de sortie d'images comprend une imprimante (18), et où la génération du modèle d'étalonnage en utilisant l'appareil de sortie d'images comprend l'impression du modèle d'étalonnage.

42. Procédé selon la revendication 41, dans lequel les données du modèle d'étalonnage reçues du deuxième appareil de traitement informatique définissent le modèle d'étalonnage comme une pluralité de parties respectives à imprimer sur des supports d'enregistrement séparés, et où l'imprimante est commandée pour imprimer le modèle d'étalonnage comme une pluralité de parties respectives sur une pluralité de supports d'enregistrement.

43. Procédé selon l'une quelconque des revendications 33 à 40, dans lequel l'appareil de sortie d'images comprend un écran (19), et où la génération du modèle d'étalonnage en utilisant l'appareil de sortie d'images comprend l'affichage du modèle d'étalonnage.

44. Procédé selon l'une quelconque des revendications 33 à 43, dans lequel des données sont reçues du deuxième appareil et lui sont envoyées par le biais d'Internet (8).

45. Système pour le traitement de données d'images en utilisant au moins un premier (6) et un deuxième (2, 4) appareils de traitement informatiques connectés, **caractérisé en ce que** :
le premier appareil (6) comprend :
un moyen (38) pour générer et envoyer au deuxième appareil des données définissant un modèle d'étalonnage de particularités différentiables pour permettre au deuxième appareil de générer le modèle d'étalonnage avec un appareil (18, 19) de sortie d'images ;
un moyen (32) pour stocker des données définissant le modèle d'étalonnage pour une utilisation ultérieure ;
un moyen (34) pour recevoir des données définissant plusieurs images de l'objet sujet et le modèle d'étalonnage enregistrées avec un moyen d'imagerie à des orientations relatives différentes ; et
un moyen (40) pour mettre en oeuvre un traitement sur la base des données stockées définissant le modèle d'étalonnage pour calculer l'orientation à laquelle au moins une partie des images ont été enregistrées ;
et où le deuxième appareil (2, 4) comprend :
un moyen pour recevoir les données du modèle d'étalonnage depuis le premier appareil ; et
un moyen pour commander un appareil (18, 19) de sortie d'images afin de générer le modèle d'étalonnage en accord avec les données provenant du premier appareil pour permettre l'enregistrement de plusieurs images de l'objet sujet et du modèle d'étalonnage avec un moyen d'imagerie à des orientations relatives différentes.

46. Système selon la revendication 45, dans lequel le premier appareil (6) comprend en outre :
un moyen (42) pour mettre en oeuvre un traitement en utilisant les orientations calculées afin de générer des données définissant un modèle informatique tridimensionnel de l'objet sujet.

47. Système selon la revendication 45, dans lequel :
le système comprend en outre un appareil de modélisation en 3D (2, 4) comprenant un moyen (42) pour mettre en oeuvre un traitement en utilisant les orientations calculées afin de générer des données définissant un modèle informatique tridimensionnel de l'objet sujet ; et
le premier appareil (6) comprenant en outre un moyen (34) destiné à envoyer des données définissant les orientations calculées à l'appareil de modélisation en 3D.

48. Système selon la revendication 47, dans lequel l'appareil de modélisation en 3D est le deuxième appareil auquel les données du modèle d'étalonnage sont envoyées.

49. Système selon l'une quelconque des revendications 45 à 48, dans lequel
le deuxième appareil (2, 4) comprend en outre un moyen destiné à envoyer des données définissant des détails de l'appareil (18, 19) de sortie d'images au premier appareil (6) ; et
le premier appareil (6) est agencé pour générer les données du modèle d'étalonnage selon les détails de l'appareil (18, 19) de sortie d'images.

50. Système selon l'une quelconque des revendications 45 à 49, dans lequel
le deuxième appareil (2, 4) comprend en outre un moyen destiné à envoyer des données définissant une caractéristique de l'objet sujet au premier appareil (6) ; et
le premier appareil (6) est agencé pour générer les données du modèle d'étalonnage selon la caractéristiques de l'objet sujet.

51. Système selon l'une quelconque des revendications 45 à 50, dans lequel
le moyen destiné à commander un appareil de sortie d'images peut fonctionner pour commander une imprimante (18) afin d'imprimer le modèle d'étalonnage en accord avec les données provenant du premier appareil (6) ; et
le moyen (38) destiné à générer et à envoyer au deuxième appareil des données définissant un modèle d'étalonnage peut fonctionner pour générer et envoyer des données pour permettre au deuxième appareil d'imprimer le modèle d'étalonnage en utilisant une imprimante (18).

52. Système selon la revendication 51, dans lequel le moyen (38) destiné à générer et à envoyer les données du modèle d'étalonnage dans le premier appareil est agencé pour générer les données afin de définir le modèle d'étalonnage comme une pluralité de parties respectives à imprimer sur des supports d'enregistrement séparés.

53. Système selon l'une quelconque des revendications 45 à 50, dans lequel
le moyen destiné à commander un appareil de sortie d'images peut fonctionner pour commander un appareil d'affichage (19) pour afficher le modèle d'étalonnage en accord avec les données provenant du premier appareil (6) ; et
le moyen (38) destiné à générer et à envoyer au deuxième appareil des données définissant un modèle d'étalonnage peut fonctionner pour générer et envoyer des données pour permettre au deuxième appareil d'afficher le modèle d'étalonnage en utilisant l'appareil d'affichage (19).

54. Appareil pour le traitement de données d'images (6), **caractérisé par** :
un moyen (38) destiné à générer et à envoyer des données à un deuxième appareil de traitement informatique définissant un modèle d'étalonnage de particularités différentiables pour permettre au deuxième appareil de générer le modèle d'étalonnage avec un appareil de sortie d'images ;
un moyen (32) destiné à stocker des données définissant le modèle d'étalonnage pour une utilisation ultérieure ;
un moyen (34) destiné à recevoir des données définissant plusieurs images de l'objet sujet et le modèle d'étalonnage, enregistrées avec un moyen d'imagerie à des orientations relatives différentes ; et
un moyen (40) destiné à mettre en oeuvre un traitement sur la base des données stockées définissant le modèle d'étalonnage pour calculer l'orientation à laquelle au moins une partie des images ont été enregistrées.

55. Appareil selon la revendication 54, comprenant en outre :
un moyen (42) destiné à mettre en oeuvre un traitement en utilisant les orientations calculées afin de générer des données définissant un modèle informatique tridimensionnel de l'objet sujet.

56. Appareil selon la revendication 55, comprenant en outre :
un moyen (34) destiné à envoyer des données définissant les orientations calculées à un appareil de modélisation en 3D pour permettre à l'appareil de modélisation en 3D de mettre en oeuvre un traitement en utilisant les orientations calculées afin de générer des données définissant un modèle informatique tridimensionnel de l'objet sujet.

57. Appareil selon l'une quelconque des revendications 54 à 56, dans lequel le moyen (38) destiné à générer les données du modèle d'étalonnage est agencé afin de générer les données selon les détails de l'appareil de sortie d'images reçues du deuxième appareil.

58. Appareil selon l'une quelconque des revendications 54 à 57, dans lequel le moyen (38) destiné à générer les données du modèle d'étalonnage est agencé afin de générer les données selon des données définissant une caractéristique de l'objet sujet reçues du deuxième appareil.

59. Appareil selon l'une quelconque des revendications 54 à 58, dans lequel le moyen (38) destiné à générer les données du modèle d'étalonnage peut fonctionner pour générer les données pour permettre au deuxième appareil (2) d'imprimer le modèle d'étalonnage avec une imprimante.

60. Appareil selon la revendication 59, dans lequel le moyen (38) destiné à générer les données du modèle d'étalonnage est agencé pour générer les données pour définir le modèle d'étalonnage comme une pluralité de parties respectives à imprimer sur des supports d'enregistrement séparés.

61. Appareil selon l'une quelconque des revendications 54 à 58, dans lequel le moyen (38) destiné à générer les données du modèle d'étalonnage peut fonctionner pour générer les données pour permettre au deuxième appareil (4) d'afficher le modèle d'étalonnage sur l'écran (19).

62. Support de stockage (10) stockant des instructions d'un programme informatique pour programmer un appareil de traitement programmable pour qu'il devienne fonctionnel pour mettre en oeuvre un procédé selon au moins l'une des revendications 17 à 32.

63. Signal (12) transportant des instructions d'un programme informatique pour programmer un appareil de traitement programmable pour qu'il devienne fonctionnel pour mettre en oeuvre un procédé selon au moins l'une des revendications 17 à 32.
